# EUROPÄISCHE PATENTANMELDUNG

(11) **EP 1 839 971 A2**
(43) Veröffentlichungstag der Anmeldung: **03.10.2007**
(21) Anmeldenummer: 07100651.4
(22) Anmeldetag: 17.01.2007
(51) Int. Cl.: B60S 1/24

(54) **Antriebskurbel für einen Wischerantrieb sowie Verfahren zur Einstellung eines Gestängewinkels**

(30) Priorität: 08.03.2006 DE 102006010718
(71) Anmelder: ROBERT BOSCH GMBH, 70442 Stuttgart (DE)
(72) Erfinder: Knauf, Richard, 67480 Roppenheim (FR)

(57) **Zusammenfassung**

Es wird eine Antriebskurbel (2) für ein Wischerantrieb (1), die über einen Wischermotor (3) eine Antriebswelle zur Betätigung mindestens eines Scheibenwischers antreibt, vorgeschlagen. Die Länge der Antriebskurbel (2) zur Einstellung eines Gestängewinkels, welcher einer Winkeldifferenz zweier von der Antriebskurbel (2) eingenommener Endpositionen entspricht, ist veränderbar. Die Antriebskurbel (2) umfasst eine Lagerwelle (4) und eine Kurbelplatte (5), die über einen Kugelzapfen (6) mit einer Gelenkstange (7) verbunden sind. Erfindungsgemäß weist die Kurbelplatte (5) einen Verformungsbereich (8) auf, der zur Längenänderung der Antriebskurbel (2) mittels mindestens eines Verformungselementes (9a, 9b) plastisch verformbar ist.

## Beschreibung

### Stand der Technik

Die vorliegende Erfindung betrifft eine Antriebskurbel für einen Wischerantrieb, die über einen Wischermotor eine Antriebswelle zur Betätigung mindestens eines Scheibenwischers antreibt, wobei die Länge der Antriebskurbel zur Einstellung eines zwischen der Antriebswelle des Wischermotors und dem Scheibenwischer ausgebildeten Gestängewinkels veränderbar ist, welcher eine Winkeldifferenz zweier von der eingenommener Endpositionen entspricht. Die Antriebskurbel umfasst eine Lagerwelle und eine Kurbelplatte, die über einen Kugelzapfen mit einer Gelenkstange verbunden sind. Ferner betrifft die Erfindung einen Wischerantrieb mit einer erfindungsgemäßen Antriebskurbel sowie ein Verfahren zur Einstellung eines Gestängewinkels.

Antriebskurbeln der oben genannten Art sind in Wischerantrieben für Kraftfahrzeuge bereits bekannt. Die Wischerantriebe werden in der Regel ohne Einstellung der Gestängewinkel ausgeführt. Im Normalfall soll der Gestängewinkel insbesondere des fahrerseitigen Wischerlagers so nahe wie möglich an einer oberen Toleranzgrenze ausgeführt werden, um ein möglichst großes Wischfeld auf der Scheibe und einen kleinen Abstand des Wischers zur A-Säule des Kraftfahrzeuges zu erhalten. Um dies zu erreichen wird die Auslegung des Gestänges so gewählt, dass der Wischwinkel vorzugsweise in der oberen Toleranzgrenze des Toleranzfeldes liegt. In der Fertigung werden die Wischwinkel oftmals zu 100% überprüft und bei Überschreitung oder Unterschreitung dieser Toleranzgrenze durch eine gezielte Verlängerung oder Verkürzung der Antriebskurbel soweit reduziert, dass sie wieder in den Toleranzbereich fallen. Eine Verlängerung oder Verkürzung der Kurbelplatte der Antriebskurbel um bis zu 0,25mm ist im Normalfall ausreichend.

Dazu wird im allgemein bekannten Stand der Technik für eingeschränkte Toleranzen in besonderen Fällen die Kurbelplatte der Antriebskurbel eines Wischerlagers mit einem Kugelzapfen ausgeführt, der in einer Excenterbuchse gelagert und zur Befestigung mit einer Befestigungsmutter gekontert ist. Durch Lösen der Befestigungsmutter und anschließendes Verdrehen des Kugelzapfens kann die Länge der Antriebskurbel und damit auch des Gestängewinkel des Wischerlagers eingestellt werden. Dieser Vorgang ist sehr zeitintensiv und normalerweise auch nicht zu automatisieren, sondern muss überwiegend manuell durchgeführt werden. Somit ist der Vorgang des Einstellen des Gestängewinkels sehr kostenintensiv und auch nur sehr aufwendig in eine Fertigungslinie zu integrieren.

Es ist daher Aufgabe der vorliegenden Erfindung, eine Antriebskurbel für einen Wischerantrieb sowie ein Verfahren zur Einstellung des Gestängewinkels bereitzustellen, das eine einfache und schnelle Einstellung des Gestängewinkels ermöglicht.

### Offenbarung der Erfindung

Diese Aufgabe wird erfindungsgemäß dadurch gelöst, dass die Kurbelplatte einen Verformungsbereich aufweist, der zur Längenänderung der Antriebskurbel mittels mindestens eines Verformungselementes plastisch verformbar ist.

Mit anderen Worten basiert die Erfindung auf dem Grundgedanken, durch plastische Verformungen der Kurbelplatte den Gestängewinkel und somit auch den an der Scheibe des Kraftfahrzeugs zu messenden Wischwinkel auf schnelle und einfache Art einzustellen.

So kann beispielsweise bei gekröpften Antriebskurbeln der Winkel der Kröpfung durch mechanisches Biegen derart geändert werden, dass die Kurbelplatte durch eine Vergrößerung des Kröpfungswinkels verkürzt bzw. durch eine Rücknahme der Kröpfung verlängert werden kann.

In einem alternativen Ausführungsbeispiel ist der Verformungsbereich zur Verringerung von zu verformenden Wandstärken mit mindestens einer Aussparung und/oder Vertiefung versehen, wobei durch die Aussparung und/oder Vertiefung in der Kurbelplatte ausgebildete Stege zur Längenänderung der Antriebskurbel dehnbar bzw. stauchbar sind. Durch die Verringerung der Wandstärken ist vorteilhafterweise eine wesentlich geringere Verformungskraft oder Verformungsenergie notwendig, um die zur Längenänderung notwendige plastische Verformung an dem Bauteil zu erzielen. Dadurch kann die Dehnung bzw. die Stauchung wesentlich genauer gesteuert werden und es treten geringere Eigenspannung in dem plastisch verformten Bauteil auf.

Um die in der Kurbelplatte ausgebildeten Stege zu dehnen oder zu stauchen, kann das Verformungselement in die Aussparung und/oder Vertiefung in der Kurbelplatte eingefahren werden. Zur Verlängerung der Antriebskurbel kann dann das Verformungselement in den Aussparung und/oder die Vertiefung verfahren werden und dabei die Stege im Bereich der Aussparung dehnen und so die Länge der Antriebskurbel vergrößern. Es ist auch möglich zwei Verformungselemente in die Aussparung und/oder Vertiefung einzufahren und diese anschließend entgegengesetzt zueinander derart zu verfahren, dass die Stege durch ein Auseinanderziehen der beiden Kurbelplattenteile gedehnt und damit die Kurbelplatte verlängert werden, oder durch ein entsprechendes Verfahren in Richtung der Stege die Stege zu stauchen und die Antriebskurbel entsprechend zu verkürzen. Es ist auch möglich, die Kurbelplatte einseitig zu fixieren und nur ein Verformungselement beispielsweise in Form eines Stempels in die Aussparung und/oder die Vertiefung einzufahren und anschließend entgegengesetzt zu dem Fixierungspunkt zu verfahren, so dass die Stege an der Aussparung und/oder der Vertiefung gedehnt werden und die Antriebskurbel entsprechend verlängert wird.

Ein Dehnen der Stege ist auch durch ein als konischer Stempel ausgeführtes Verformungselement möglich, welches senkrecht in die Aussparung der an ihrer Unterseite abgestützten Kurbelplatte eingefahren wird. Vorteilhaft ist hier, dass zur Dehnung der Kurbelplatte das Verformungselement nur in eine Bewegungsrichtung verfahren werden muss, wodurch die Prozesssteuerung vereinfacht wird.

In einem alternativen Ausführungsbeispiel stehen die durch die Aussparung bzw. Vertiefung ausgebildeten Stege bogenförmig oder ein Winkel bildend nach außen aus der Kurbelplatte vor, um die Stege durch das Verformungselement zur Verlängerung der Antriebskurbel zu stauchen. Hierbei ist es möglich zwei Verformungselemente von beiden Seiten außen an die Stege zu fahren und dabei die Stege zusammenzudrücken, wodurch die Länge der Antriebskurbel vergrößert wird.

Um eine gezielte Verlängerung bzw. Verkürzung der Kurbelplatte zu erreichen, kann das Verformungselement während der plastischen Verformung kraft- und/oder weggesteuert sein.

Es ist auch möglich, zur Einstellung des Gestängewinkels eine Motorkurbel plastisch zu verformen, jedoch ist auf Grund der eingeschränkten Zugänglichkeit und der komplexen Bauweise des Bereichs, in dem die Motorkurbel eingebaut ist, eine plastische Verformung der Kurbelplatte der Antriebskurbel zu bevorzugen.

Zur Automatisierung der Einstellung des Gestängewinkels kann das Verfahren auf einfache Weise in eine Fertigungslinie integriert werden. Dieser Abschnitt der Fertigungslinie umfasst das Messen des Gestängewinkels, über den auf den Wischwinkel des Scheibenwischers auf der Windschutzscheibe eines Kraftfahrzeuges rückgeschlossen werden kann. Ist der Gestängewinkel außerhalb des Toleranzbereichs, so wird die Wischeranordnung in eine in der Fertigungslinie vorgesehene Korrekturschleife geleitet, in der die Stege der Kurbelplatte bzw. die Kurbelplatte selbst entsprechend der Abweichung des Gestängewinkels von dem vorher festgelegten Toleranzbereich mittels kraft- bzw. weggesteuerter Stempel plastisch verformt wird.

Hinsichtlich weiterer vorteilhafter Ausgestaltungen und Weiterbildungen der Erfindung wird auf die Unteransprüche sowie die nachfolgende Beschreibung eines Ausführungsbeispiels anhand der beiliegenden Zeichnungen verwiesen. In der Zeichnung zeigt:
- Figur 1: eine schematische Darstellung eines Wischerantriebs mit einer Antriebskurbel mit gekröpfter Kurbelplatte;
- Figur 2: eine schematische Teildarstellung des Wischantriebs gemäß der Figur 1 mit einer Kurbelplatte mit einer ovalen Aussparung in der Kurbelplatte; und
- Figur 3: eine schematische Teildarstellung des Wischantriebs gemäß der Figur 1 mit einer Kurbelplatte mit nach außen bogenförmig vorstehenden Stegen.

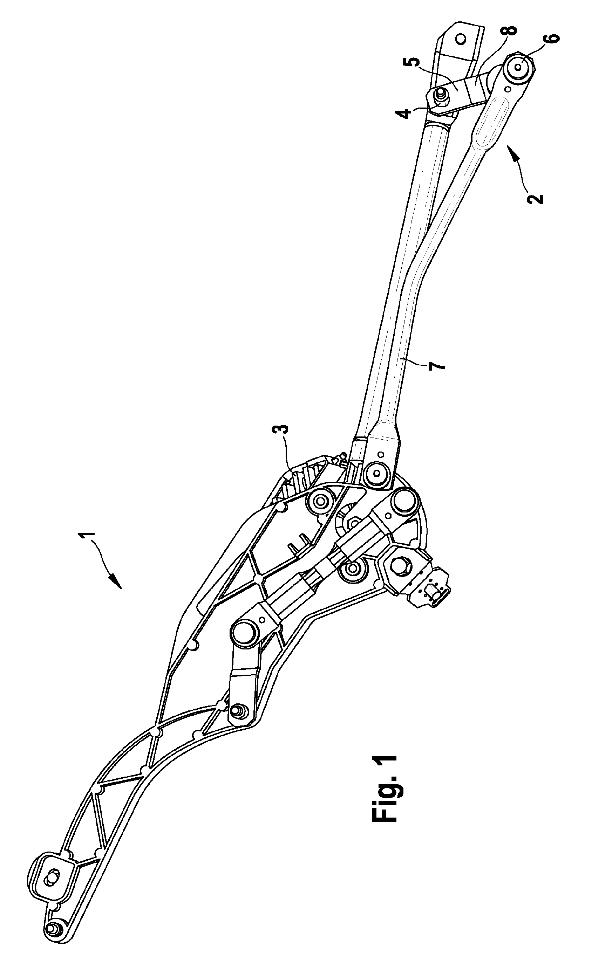

Die Figur 1 zeigt eine schematische Darstellung eines Wischerantriebes 1 mit einer Antriebskurbel 2, die über einen Wischermotor 3 eine Antriebswelle zur Betätigung mindestens eines Scheibenwischers antreibt. Die Antriebskurbel 2 ist aus einer Lagerwelle 4 und einer Kurbelplatte 5 zusammengesetzt, die über einen Kugelzapfen 6 mit einer Gelenkstange 7 verbunden sind. Zur Einstellung eines Gestängewinkels, welcher eine Winkeldifferenz zweier von der Antriebskurbel 2 eingenommener Endpositionen entspricht, kann die Länge der Kurbelplatte 5 verändert werden. Dazu weist die Kurbelplatte 5 einen Verformungsbereich 8 auf, der zur Längenänderung der Antriebskurbel 2 mittels zweier Verformungselemente 9a, 9b plastisch verformbar ist. Die Verformungselemente 9a, 9b sind als konische Stempel einer nicht näher dargestellten Spannzange ausgeführt.

In dem Ausführungsbeispiel gemäß der Fig.1 ist die Kurbelplatte 5 gekröpft. Um die Länge der Antriebeskurbel 2 zu verändern, kann der Winkel der Kröpfung der Kurbelplatte 5 in dem Verformungsbereich 8 durch mechanisches Biegen derart geändert werden, dass die Kurbelplatte 5 durch ein weiteres Stauchen der Kröpfung verkürzt oder durch ein Dehnen der Kröpfung verlängert werden kann.

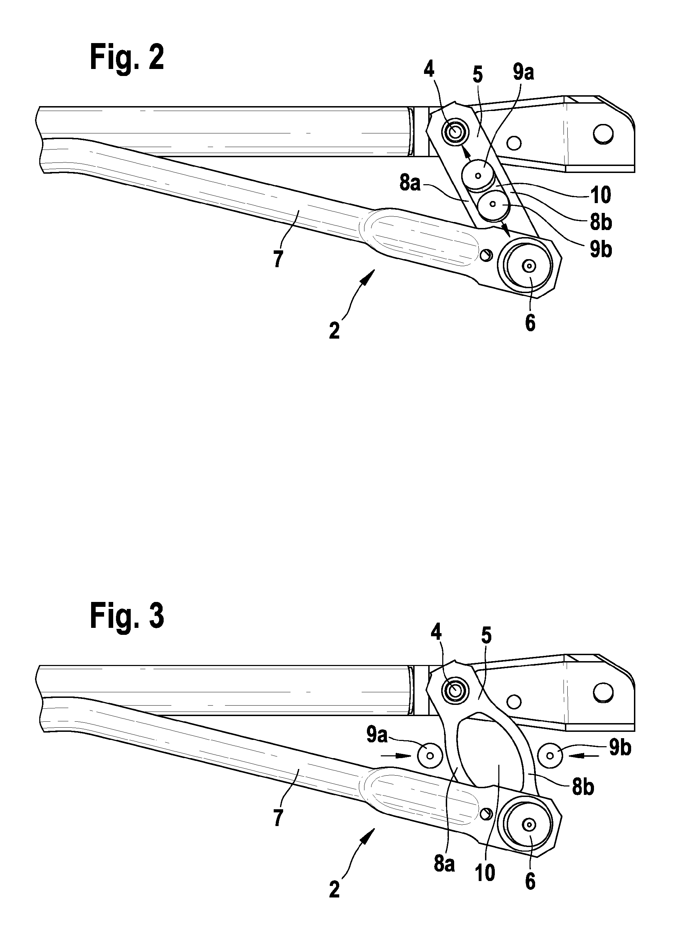

Die Figur 2 zeigt eine Teildarstellung des Wischerantriebes 1 gemäß der Figur 1 mit einer ovalen Aussparung 10 in der Kurbelplatte 5. Die Aussparung 10 ist in dem Verformungsbereich 8 ausgebildet und dient der Verringerung der Wandstärken in dem Verformungsbereich 8. Durch die Aussparung 10 werden Stege 8a, 8b ausgebildet, die zur Längenänderung der Kurbelplatte 5 der Antriebeskurbel 2 dehnbar oder stauchbar sind.

Um die in der Kurbelplatte 5 ausgebildeten Stege 8a, 8b zu dehnen oder zu stauchen, werden in diesem Ausführungsbeispiel zwei Verformungselemente 9a, 9b in die Aussparung 10 eingefahren und anschließend entsprechend der Richtung der in der Figur 2 eingezeichneten Pfeile entgegengesetzt zueinander verfahren, so dass die Stege 8a, 8b gedehnt und damit die Kurbelplatte 5 und somit die Antriebskurbel 2 verlängert wird. Werden die beiden Verformungselemente 8a, 8b senkrecht zu der angezeigten Richtung der Pfeile verfahren, ist es auch möglich, durch eine dadurch hervorgerufene Stauchung der Stege 8a, 8b die Antriebskurbel 2 entsprechend zu verkürzen.

Zum Dehnen der Stege kann alternativ die Kurbelplatte 5 an der Unterseite abgestützt und das Verformungselement 9a, 9b, welches in der Form eines konischen Stempels ausgebildet ist, senkrecht in die Aussparung 10 eingefahren werden. Die Dehnung der Kurbelplatte 5 erfolgt dann durch ein Verfahren des Stempels in nur eine Richtung erfolgen, wodurch die Prozesssteuerung vereinfacht wird.

Die Figur 3 zeigt eine Teildarstellung eines Wischerantriebes 1 gemäß der Figur 1 mit einer Kurbelplatte 5 mit nach außen bogenförmig vorstehenden Stegen 8a, 8b.

Zur Verformung der beiden Stege 8a, 8b werden zwei Verformungselemente 9a, 9b wie in der Figur 3 mit Pfeilen angedeutet in Richtung zueinander bewegt und drücken dabei die Stege 8a, 8b zusammen, wodurch die Länge der Kurbelplatte 5 der Antriebkurbel 2 vergrößert wird.

In jedem Ausführungsbeispiel sind die Verformungselemente 9a, 9b kraft- oder weggesteuert. Um die Strecke zu bestimmen, um welche die Verformungselemente 9a, 9b zur Korrektur des Gestängewinkels verfahren werden sollen, wird zunächst der Gestängewinkel in einer Fertigungslinie gemessen. Liegt der Gestängewinkel außerhalb eines vorher festgelegten Toleranzbereichs, so wird der Wischerantrieb 1 in eine in der Fertigungslinie vorgesehene Korrekturschleife geleitet, in der die Stege 8a, 8b der Kurbelplatte 5 bzw. die Kröpfung der Kurbelplatte 5 entsprechend der Abweichung des Gestängewinkels von dem Toleranzbereich mittels der Verformungselemente 9a, 9b plastisch verformt werden, indem die Stempel entsprechend der aus der Abweichung berechneten Strecke verfahren werden. Aus der Abweichung kann auch bei bekanntem Elastizitätsmodul des Werkstoffes und der Dicke des zu verformenden Werkstückes die benötigte Verformungskraft der Stempel errechnet werden und die Verformung der Kupplungsplatte 5 entsprechend kraftgesteuert erfolgen.

## Patentansprüche

1. Antriebskurbel (2) für ein Wischerantrieb (1), die über einen Wischermotor (3) eine Antriebswelle zur Betätigung mindestens eines Scheibenwischers antreibt, deren Länge zur Einstellung eines Gestängewinkels veränderbar ist, welcher einer Winkeldifferenz zweier von der Antriebskurbel (2) eingenommener Endpositionen entspricht, wobei die Antriebskurbel (2) eine Lagerwelle (4) und eine Kurbelplatte (5) umfasst, die über einen Kugelzapfen (6) mit einer Gelenkstange (7) verbunden sind,
**dadurch gekennzeichnet, dass** die Kurbelplatte (5) einen Verformungsbereich (8) aufweist, der zur Längenänderung der Antriebskurbel (2) mittels mindestens eines Verformungselementes (9a, 9b) plastisch verformbar ist.

2. Antriebskurbel (2) nach Anspruch 1,
**dadurch gekennzeichnet, dass** der Verformungsbereich (8) zur Verringerung der zu verformenden Wandstärken mit mindestens einer Aussparung und/oder einer Vertiefung (10) versehen ist, wobei durch die Aussparungen und/oder Vertiefungen (10) in der Kurbelplatte (5) ausgebildete Stege (8a, 8b) zur Längenänderung der Antriebskurbel (2) dehnbar oder stauchbar sind.

3. Antriebskurbel (2) nach Anspruch 1 oder 2,
**dadurch gekennzeichnet, dass** das Verformungselement (9a, 9b) in die Aussparung und/oder Vertiefung (10) eingreift, um die Stege (8a, 8b) durch das Verformungselement (9a, 9b) zur Verlängerung der Antriebskurbel (2) zu dehnen oder zur Verkürzung der Antriebskurbel (2) zu stauchen.

4. Antriebskurbel (2) nach Anspruch 1 oder 2,
**dadurch gekennzeichnet, dass** die durch die Aussparung bzw. Vertiefung (10) ausgebildeten Stege (8a, 8b) bogenförmig oder einen Winkel bildend nach außen aus der Kurbelplatte (5) vorstehen, um die Stege (8a, 8b) durch das Verformungselement (9a, 9b) zur Verlängerung der Antriebskurbel (2) zu stauchen.

5. Antriebskurbel (2) nach einem der vorhergehenden Ansprüche,
**dadurch gekennzeichnet, dass** das Verformungselement (9a, 9b) während der plastischen Verformung kraft- und/oder weggesteuert ist.

6. Verfahren zur Einstellung eines Gestängewinkels eines Wischerlagers von Wischerantrieben (1) für Kraftfahrzeuge durch eine Änderung der Länge einer an dem Wischerlager angeordneten Antriebskurbel (2) nach einem der Ansprüche 1 bis 5,
**dadurch gekennzeichnet, dass** die Kurbelplatte (5) zur Längenänderung der Antriebskurbel (2) mittels mindestens eines Verformungselementes (9a, 9b) plastisch verformt wird.

7. Verfahren nach Anspruch 6
**dadurch gekennzeichnet, dass** die in der Kurbelplatte (5) durch mindestens eine Aussparung und/oder eine Vertiefung (10) ausgebildeten Stege (8a, 8b) mittels des Verformungselementes (9a, 9b) gedehnt oder gestaucht werden, um die Länge der Antriebskurbel (2) zu verändern.

8. Verfahren nach Anspruch 7,
**dadurch gekennzeichnet, dass** das Verformungselement (9a, 9b) zur plastischen Verformung der Stege (8a, 8b) in die Aussparung bzw. Vertiefung (10) eingefahren wird, wobei die Stege (6a, 6b) zur Verlängerung der Antriebskurbel (2) durch das Verformungselement (9a, 9b) gedehnt und zur Verkürzung der Antriebskurbel (2) gestaucht werden.

9. Wischerantrieb (1) mit einer Antriebskurbel (2) nach einem der Ansprüche 1 bis 5.
